# EUROPEAN PATENT APPLICATION

(11) **EP 4 660 821 A1**
(43) Date of publication of application: **10.12.2025**
(21) Application number: 25169178.8
(22) Date of filing: 08.04.2025
(51) Int. Cl.: G06F 16/178, G06F 16/41

(54) **SYNCHRONISATION OF MEDIA FILES**

(30) Priority: 07.06.2024 AU 2024901723
(71) Applicant: Blackmagic Design Pty Ltd, South Melbourne, Victoria 3205 (AU)
(72) Inventor: HAMMERTON, David, South Melbourne, 3205 (AU); CLARKE, Doug, South Melbourne, 3205 (AU)
(74) Representative: Mathys & Squire

(57) **Abstract**

Disclosed herein are methods of synchronising a media file between two computing devices. The media file includes a file header, at least one descriptor portion enabling reading of media elements in the body portion and at least one file body in which media elements are stored. The synchronising of the media file occurs between a first copy of the media file stored at a first computing device and a second copy of the media file stored on a second computing device and the synchronisation of the second copy of the media file with the first copy of the media file commences before finalisation of the first copy of the media file and continues at least while one or more media elements are being written to a file body of the first copy of the media file at the first computing device. Also disclosed are methods of sending synchronisation data to the second computing device and updating the second copy of the media file at the second computing device.

## Description

### Field

The present disclosure relates to methods for synchronisation of a media file between two computing devices. The methods are adapted to enable synchronisation of the media file to begin while the media file is still being written to the first computing device, that is, the original media file is still growing.

In one exemplary form the disclosure relates to a first computing device synchronising a media file with a second computing device that operates as a remote storage system. In some examples the second computing device, e.g. remote storage system, may take the role as the first computing device in a further synchronisation process to further synchronise the media file with another computing device (or devices).

### Background

In some situations it is desirable to for a copy of a media file to be created on another device that is distinct from the device or system that is the source of media file.

Solutions for this exist where source devices, such as cameras, can record files (proxy, original or both) to their internal storage or external storage system or appliance. After recording stops, those files are uploaded to a Cloud based filesystem, and after the files are uploaded they can then be distributed (downloaded) by other computing devices (e.g. a NAS, a computer syncing from the cloud, tablet computer, smart phone, or streamed on demand by an editing software). This provides near real time delivery of captured content to editors, producers, etc. and is unproblematic to perform as it may be achieved in a number of ways known to those skilled in the art.

However uploading and/or downloading of a media file on over a network, while the media file is growing, i.e. still being written at the source computer system can be problematic. In one approach it is possible to upload files from the upstream, source device while they are being recorded by sending video frames to the second computing device (e.g. a cloud based filesystem), where new files are constructed or pieced together as new frames are captured. This process can be replicated to allow download of the frames to client device s to construct further copies at the client device s. However this is not ideal as it may be difficult to confirm that the synchronised copies of the media file stored on the various devices are the same, e.g. because the checksum or md5 of the files will not match.

The systems, devices, methods, and approaches described in this section, and components thereof are known to the inventors. Therefore, unless otherwise indicated, it should not be assumed that any of such systems, devices, methods, approaches, or their components described are citable as prior art merely by virtue of their inclusion in this section, or that such systems, devices, methods, approaches, and components would ordinarily be known to a person of ordinary skill in the art.

### Summary

Aspects and embodiments of the present invention are set out in the appended claims. These and other aspects and embodiments of the invention are also described herein.

Disclosed herein are methods of synchronising a media file between two computing devices. The media file includes a file header, at least one descriptor portion enabling reading of media elements in the body portion and at least one file body in which media elements are stored. The synchronising of the media file occurs between a first copy of the media file stored at a first computing device and a second copy of the media file stored on a second computing device and the synchronisation of the second copy of the media file with the first copy of the media file commences before finalisation of the first copy of the media file and continues at least while one or more media elements are being written to a file body of the first copy of the media file at the first computing device. Also disclosed are methods of sending synchronisation data to the second computing device and updating the second copy of the media file at the second computing device.

In a first aspect there is provided a method of synchronising a media file between two computing devices; said media file including: a file header; at least one descriptor portion enabling reading of media elements in the body portion; wherein the file header includes an indication of a location of the at least one descriptor portion within the file; and at least one file body in which media elements are stored. The synchronising of the media file may occur between a first copy of the media file stored at a first computing device, and a second copy of the media file stored on a second computing device, wherein synchronisation of the second copy of the media file with the first copy of the media file commences before finalisation of the first copy of the media file and continues at least while one or more media elements are being written to a file body of the first copy of the media file at the first computing device. The method may comprise:
(a) determining a modification to a descriptor portion of the first copy of the media file;
(b) determining media elements to send to the second computing device for addition to the second copy of the media file;
(c) in the event that there have been no further modifications to the descriptor portion of the first copy of the media file, sending synchronisation data to the second computing device to enable updating of the second copy of the media file.

The method may include includes storing a last-updated version of the descriptor portion of the first copy of the media file to enable step (a).

Step (a) may comprise any one or more of:
- receiving a notification of a modification from another process or application;
- polling the first cop of the media file to detect a detect a modification thereto;
- determining a change in either or both of, a location or content of the descriptor portion of the first copy of the media file.

In the event that there have been further modifications to the media file's descriptor portion in the first copy of the media file while performing (b) the method can include returning to step (a).

Step (b), may comprise; comparing the last-updated version of the descriptor portion of the first copy of the media file to a current descriptor portion of the first copy of the media file; and determining one or more media elements written to the file body since the storage of the last-updated version of the media file's descriptor portion.

In some embodiments synchronisation data may comprise:
- a current file header;
- a current descriptor portion of the first copy of the media file; and/or
- those media elements written to the file body of the first version of the media file, between the storage of the last-updated version of the media file's descriptor portion and the time at which (a) was performed.

In some embodiments step (a) may include: storing a separate copy of the current version of the descriptor portion and file header of the first copy of the media file; and
in step (c) the synchronisation data may be derived from: said separate copy of the current version of the descriptor portion and file header of the first copy of the media file; and media elements written to the file body of the first version of the media file, since the storage of the last-updated version of the descriptor portion of the first copy of the media file and the time at which said separate copies of the current version of the descriptor portion and file header of the first copy of the media file were made.

Upon synchronisation of the second copy of the file the method may comprise: updating the last-updated version of the descriptor portion of the first copy of the media file using the current version of the descriptor portion used in the last synchronisation event and returning to step (a) to enable a subsequent synchronisation.

In some embodiments the method may be performed by a synchronisation process or application that is separate to a process or application causing the first copy of the media file to be written at the first computing device. The process or application causing the first copy of the media file to be written at the first computing device may indicate to the synchronisation process the finalisation of writing the first copy of the media file.

In a second aspect there is provided a method of synchronising a media file between two computing devices. The media file said media file may include: a file header; a descriptor portion enabling reading of media elements in the body portion; wherein the file header includes an indication of a location of the descriptor portion within the file; anda file body in which media elements are stored. Synchronising of the media file may occur between a first copy of the media file stored at a first computing device, and a second copy of the media file stored on a second computing device, wherein synchronisation of the second copy of the media file with the first copy of the media file commences before finalisation of the first copy of the media file and continues at least while one or more media elements are being written to the file body of the first copy of the media file at the first computing device. The method may comprise, at the second computing device: receiving synchronisation data to enable updating of the second copy of the media file; updating the second copy of the media file at the second computing device by writing updated data relating to least one of, the file header, descriptor portion or file body of the second copy of the media file.

The method can include creating a new version of the second copy of the media file.

Creating a new version of the second copy of the media file may comprise appending a patch to current version of the second copy of the media, said patch containing said updated data.

The method may include preventing reading of said patch of the new version of the second copy of the media file until the writing of the updated data is complete, such that a client computing device can only read the current version of the second copy of the second media file during synchronisation.

The method may further include, at the second computing device, updating the second copy of the media file by: writing the current version of the descriptor portion and file header of the first copy of the media file to the second copy of the media file; and writing the media elements contained in the synchronisation data to the to the second copy of the media file.

In the event that writing the media elements contained in the synchronisation data to the to the second copy of the media file would overwrite the copy of the last updated descriptor portion in the second copy of the media file; the method may further include: prior to overwriting the last updated descriptor portion of the second copy of the media file with new media elements, writing a copy of the last-updated version of the descriptor portion at a location past the current version of the descriptor portion; and modifying the file header to indicate the location of the at last updated descriptor portion within the second copy of the media file to enable temporary reading of the second copy of the media file during synchronisation; and once all media elements contained in the synchronisation data are written to the second copy of the media file, modifying the file header to indicate the location of the at current descriptor portion within the file to enable full reading of the second copy of media file.

The method can include truncating the second copy of the media file to delete the last updated descriptor portion from the second copy of the media file, after synchronisation.

In a third aspect there is provided a method of synchronising a media file between two computing devices, comprising a first computing device and a second computing device that are in data communication with each other via a communications network. The method may further include performing a method of according to an embodiment of the first aspect of the disclosure at the first computing device; and performing a method according to an embodiment of the second aspect of the disclosure second computing device.

In a further aspect there is provided software instructions which when run by a computing device cause said computing device to perform one or more steps of a method according to an embodiment of one of the aforementioned aspects of the invention. In a further aspect there is also provided a computer readable medium storing such software instructions thereon.

While the invention(s) disclosed herein are amenable to various modifications and alternative forms, specific embodiments are shown by way of example in the drawings and are described in detail. It should be understood, however, that the drawings and detailed description are not intended to limit the invention(s) to the particular form disclosed. Furthermore, all alternative combinations of two or more of the individual features mentioned or evident from the claims, text or drawings comprise additional aspects or inventive disclosures, which may form the subject of additional claims.

The disclosure also provides computer programs and computer program products comprising software code adapted, when executed on a data processing apparatus, to perform any of the methods and/or for embodying any of the apparatus and system features described herein, including any or all of the component steps of any method.

The disclosure also provides a computer or computing system (including networked or distributed systems) having an operating system which supports a computer program for carrying out any of the methods described herein and/or for embodying any of the apparatus or system features described herein.

The disclosure also provides a computer readable media having stored thereon any one or more of the computer programs aforesaid.

The disclosure extends to methods, system and apparatus substantially as herein described and/or as illustrated with reference to the accompanying figures.

The disclosure also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Any feature in one aspect of the disclosure may be applied to other aspects of the invention, in any appropriate combination. In particular, method aspects may be applied to apparatus aspects, and vice versa. As used herein, means plus function features may be expressed alternatively in terms of their corresponding structure, such as a suitably programmed processor and associated memory.

Furthermore, features implanted in hardware may generally be implemented in software, and vice versa. Any reference to software and hardware features herein should be construed accordingly.

It should also be appreciated that particular combinations of the various features described and defined in any aspects of the disclosure can be implemented and/or supplied and/or used independently.

### Brief description of the Drawings

Figure 1 is a schematic diagram of three computing devices able to perform synchronisation processes according to embodiments of the disclosure.
Figure 2 is a flowchart showing a synchronisation process according to a first embodiment.
Figure 3 is a schematic diagram of a file growing process.
Figure 4 is a flowchart showing a synchronisation process according to an embodiment.
Figure 5 is a flowchart showing a file updating process according to an embodiment.
Figure 6 is a flowchart showing a synchronisation process according to an embodiment.
Figure 7 is a flowchart showing a synchronisation process according to an embodiment.
Figure 8 is a flowchart showing a file updating process according to an embodiment.
Figure 9 is a block diagram illustrating a device for implementing methods according to an embodiment of the present disclosure.

### Detailed description

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obfuscation of salient details.

Many media handing devices and software write audio and/or video and ancillary data to a storage medium (e.g., disks, network storage and the like) using files having container formats, such as QuickTime, MP4 and other container formats based on the ISO base media file format (ISOBMFF). The ISO base media file format is published by ISO as part 12 of the MPEG-4 specifications, ISO/IEC 14496-12, however, it is also used by standards and formats other than MPEG-4. The methods describe herein are adapted for use with media files of this type and similar types which have a data structure including:
- A file header (e.g., ftyp header). This typically includes file metadata and also information to enable the determination of the location of the file's descriptor portion.
- A file body portion that is used to contain media elements (e.g., mdat). The media elements may be but are not limited to, image frames if the media is a video, still image or the like, audio samples or other sound file objects, if the media file includes audio.
- At least one descriptor portion (e.g., a header or media index or the like, such as a "moov" header), which enables playback of the media elements in the body portion by telling the media player/consumer what media data is stored in the file body portion. In one form, the data that enables playback of the media elements in the body portion represents a mapping of a media element in a sequence of media element (e.g., frame n, or audio sample m) to a location of data representing that media element within in the file body portion. It may also include one or more additional metadata elements such as: metadata setting up codec parameters for decode, determining the pixel format, audio sampling, colour space information, frame duration, or in some formats a presentation order or decode order for media elements.

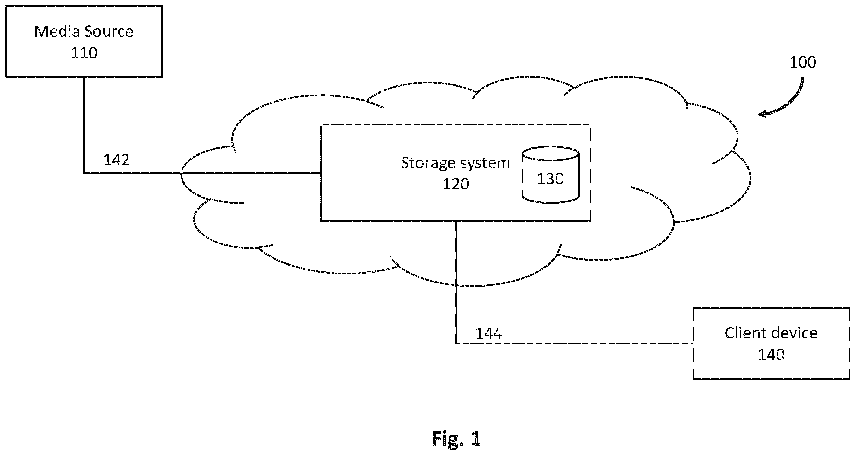

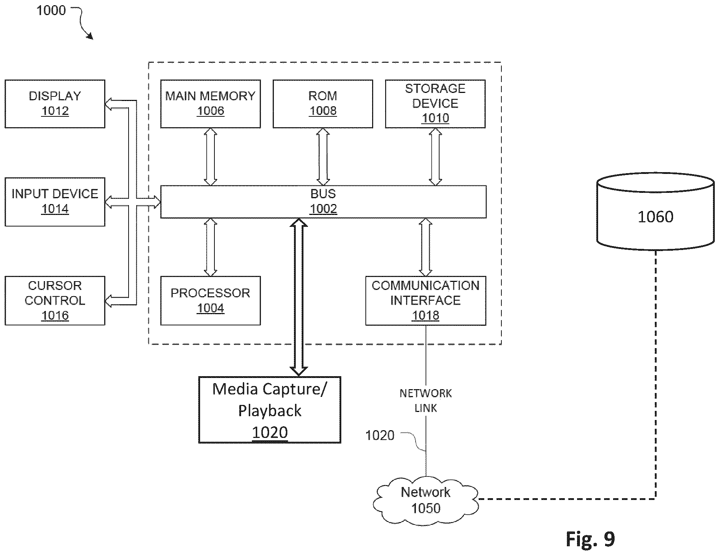

Figure 1 shows a system 100 including a media source 110, storage device 120 and client device 140. The media source 110 is connected via a network connection 142 to the storage system 120. The storage system 120 is also connected via a network connection 144 to the client device 140. It should be noted that the names "media source", storage device" and "client device " should be considered as non-limiting and are chosen to aid illustration of an exemplary use case for the embodiments described herein. The media source 110, storage system 120, client device 140 may be adapted to perform methods (either alone or together) as set out in the present disclosure. Their operation may be enabled by either software instructions or hardware processing that causes the device to perform the steps as set out herein. The media source 110, storage system 120, client device 140 may each comprise an embodiment of computing device 1000 as described below in connection with figure 9.

The media source 110 may be any computing device capable of writing a media file. For example the media source may be:

A device that initially creates a media file, such as: a camera, audio recorder, smart phone, tablet, film scanner or computer or other device running a software application that creates or generates a media file such as Davinci Resolve or other NLE or media editing application, animation or graphics rendering software, sound editing or audio production software (e.g. a DAW application);

A data storage system on which a media file may be saved; such as a computer system with one or more memory cards, hard drives, solid state drives, NAS, Blackmagic Cloudstore, Cloud Dock or other media storage device;

A media processing appliance such as Blackmagic Hyperdeck, Ultrastudio, VideoAssist, made by the Blackmagic Design Pty Ltd; or
Some combination of such hardware and software devices.

The storage system 120 may be any computing device that includes, or has access to a data storage medium 130. Typically the data storage medium 130 may comprise local or network storage to which data may be written or read under control of the storage system 120.

The client device may be any computing device capable of receiving and saving a media file, for example:
A smart phone, tablet, film scanner, PC or other computer device running a software application that may store, process or use the media file;
A data storage system on which a media file may be saved; such as a computer system with one or more memory cards, hard drives, solid state drives, NAS, Blackmagic Cloudstore, Cloud Dock or other media storage device;
A media processing appliance such as Blackmagic Hyperdeck, Ultrastudio, VideoAssist, made by the Blackmagic Design Pty Ltd; or
Some combination of such hardware and software devices.

The network connections 142, 144 may comprise any suitable wired or wireless communications links (or combination thereof) and provide a two-way data communication between the media source 110, storage system 120 and client device.

The systems illustrated in figures 1 is highly simplified and may include intervening devices between the elements illustrated, such as format converter, modems, routers, or the like, but these are omitted for brevity and so as not obscure the salient details of the disclosure.

For the sake of illustration only, the media source 110 may be a camera, and the client device 140 may be a local storage system such as a Blackmagic Cloud Store associated with a video editing system. The storage system 120 may be a Cloud storage system.

The media source 110 is arranged to synchronise a local copy of a media file being captured on the camera with the storage system 130 while the camera is shooting. This enables the synchronised media file to be accessed by one or more additional downstream devices, such as the client device 140 as soon as possible after it has been created at the media source 110 (camera). In some embodiments the download of the media file to the client device 140 may begin during creation of the media file i.e. while it is still being written at the media source 110 (camera).

In an embodiment of the present disclosure the, synchronisation of a media file between the media source 110 and the client device 140 requires two synchronisations processes to be performed, the first being a synchronised upload process from the media source 110 to the storage system 120, and the second being the synchronised download from the storage system 120 to the client device 140.

Each synchronisation process in this illustrative embodiment can be performed using an embodiment of one of the aspects of the present disclosure . Each of these synchronisation processes occurs between a respective pair of two of computing devices. In this regard there is:
a) A synchronised "upload" process from the media source 110 to the storage system 120, in which the media source takes the role of the first computing device, on which the first copy of the media file is created and stored, and the storage system takes the role of the second computing device on which the second copy of the media file is created and stored.
b) A synchronised "download" process from the storage system 120 to the client device 140, in which the storage system 120 takes the role of the first computing device, and on which the first copy of the media file is created and stored, and the client device 140 takes the role of the second computing device on which the second copy of the media file is created and stored.

The two synchronisation processes may occur at the same time, the only timing requirement being that the synchronised download process must first wait for the creation of a copy of the media file to have been created on the storage system. But it may progress as the storage system's copy of the media file is caused to grow by the synchronised upload process.

### Synchronised "upload" process

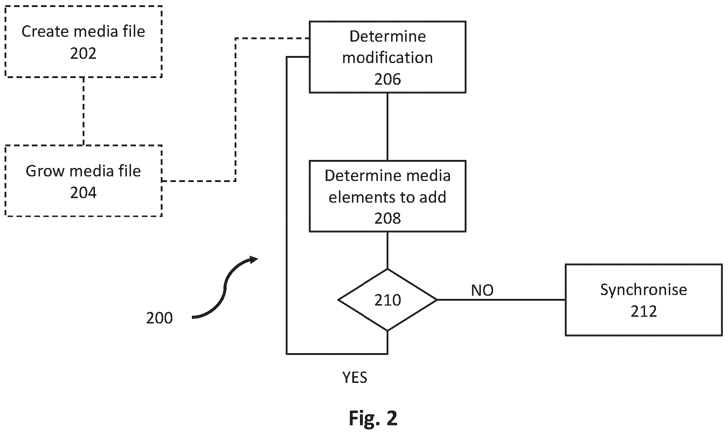

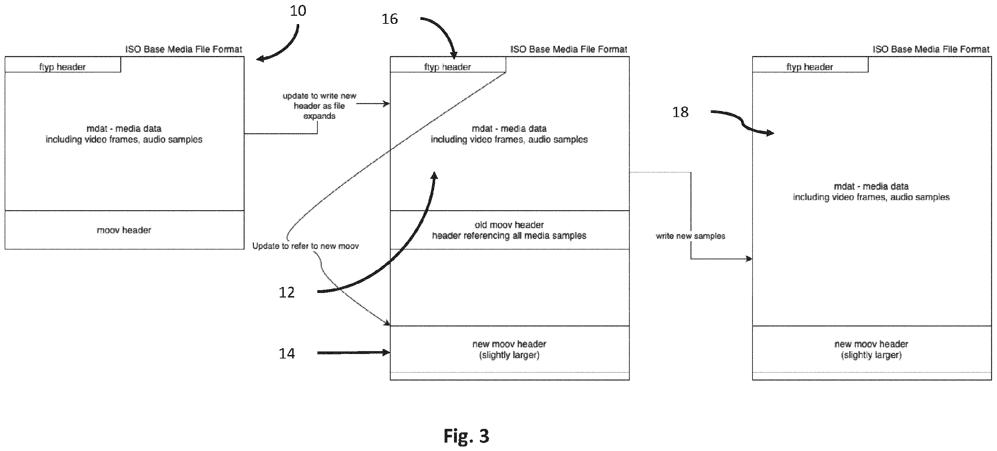

Figure 2 illustrates a method of synchronising a media file between two computing devices being the media source 110 and the storage system 120 while the file is being written to the media source 110. In this example a first process (illustrated in dotted lines) running on the first computing device (media source 110) controls the creation 202 and writing of the media file to the data storage system of the first computing device (media source 110). As new media elements become available the process of growing the file 204 will continue. The writing the media file at the media source 110 and growing it beyond its original expected size illustrated schematically (for an ISO BMFF media file (10)) in Figure 3 and involves:
a) Expanding the file (10) so new media data can be contained (12);
b) write a new descriptor portion at the end of the file (14); and
c) update the file header to allow the descriptor portion (16) to be located.

New media data can then be added to file body (18) as the recording continues with regular updates to the descriptor portion and file header as needed. The adding of new media data may involve discarding the old descriptor portion (e.g. moov header) by, e.g., overwriting the section dedicated to the old moov header with data associated with new media.

A synchronisation process, which may be a separate computing process, or run by a separate application, to the process or application causing the media file to be written to the media source 210.

The method 200 of synchronising the media file begins by, determining (206) whether there has been a modification to a descriptor portion of the first copy of the media file. This may be performed by the synchronisation process on the first computing device (media source 210) receiving a notification of a modification from the process or application causing the growing of the media file on the first computing device (media source 210). Alternatively the synchronisation process may poll the growing process to detect a modification to the media file, or by parsing or inspecting the media file. For example the synchronisation process may determine if there has been a change in either the location or content of one of the components of the media file. For example the location of the media file's descriptor portion may be determined (e.g. from its file header), or the content of descriptor portion of the media file on the first computing device (i.e. the first copy of the media file) may be checked for changes, such as by comparing the current descriptor portion the media file against a stored copy of the descriptor portion of the of the media file. This stored copy of the descriptor portion of the media file is preferably the version of the descriptor portion that was used in the last (ie. most recent prior) synchronisation process, called herein for convenience the "last updated descriptor portion".

Next the method 200 continues at 208 by determining media elements that have been added to the media file since the last update, and thus need to be sent to the second computing device (storage system 120) for addition to its second copy of the media file to synchronised the copies of the media file with each other.

Step 208 can be performed by comparing the stored copy of last-updated version descriptor portion of the media file with the current descriptor portion of the media file at the first computing device (media source 210). This comparison identifies the location of the media elements in the file body of the first copy of the media file that have been written to the file body since the last synchronisation was performed.

One difficulty in a method of the present embodiment is avoiding a race condition where the growing process continues to update the media file and overwrites the descriptor portion of the first copy of the media file before synchronisation is competed. The presence of such a condition is checked at 210 before synchronisation occurs. At step 210 , if the synchronisation process 200 determines that there have been no further modifications to the descriptor portion of the first copy of the media file (during the performance of step 208), synchronisation can continue at step 212 by sending synchronisation data to the second computing device to enable updating of the second copy of the media file. This is achieved by comparing the current location of the descriptor portion of the media file and its location at the time of performing step 206.

In the event in step 210 that there have been further modifications to the media file's descriptor portion while performing (b) the process 200 returns to step (a) without synchronising.

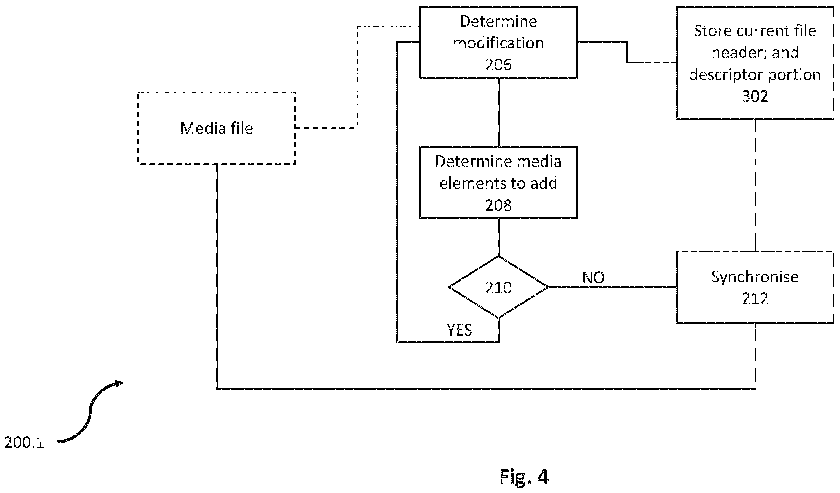

Figure 4 illustrates a further development of the method of figure 2 and common steps have common reference numerals and will not be re-described. To further assist ensuring that the synchronised, second copy of the media file stored at the second computing device 120 (the storage device) is always a valid file and the method 200.1 determination step includes a substep 302 of storing the current file header and descriptor portion once a change has been determined to have occurred (and synchronisation is necessary). These stored data are use in steps 208 to determine the specific media elements that need to be synchronised, in 210, and in the creation of the synchronisation data as describe below.

Turning firstly to step 210. In a preferred version the step 210 of checking that there have been no further modifications to the descriptor portion of the first copy of the media file, is performed by comparing the stored version of the descriptor portion and/or file header to the corresponding portions of the media file that are extant at the time of comparison. In some embodiments it may be sufficient to only check the file header to determine if the location of the descriptor has changed (indicating file growing) or only checking the content of the descriptor portion to determine if there are more media elements to synchronise. If the descriptor portion and/or file header has changed it indicates that the present synchronisation process is already out of date and the process must be restarted at 206.

In order to synchronise the second copy of the media file so that it matches the first copy of the media file, as it existed at the instant the synchronisation process was begun it is necessary to update the file header, descriptor portion and add the missing media elements to the second copy. This synchronisation data including the current file header; the current descriptor portion of the first copy of the media file; and those media elements written to the file body of the first version of the media file, between the last update and the start of the synchronisation step.

In a preferred form, the synchronisation data is not re-read from the media file as this risks being in conflict with the file writing process which may continue to grow the media file and overwrite either the file header or descriptor portion. Therefore it is preferable for the copy of the descriptor portion and file header of the first copy of the media file that is stored in step 302 to be used for the synchronisation data. This data has been verified to be a valid representation of the file at the point in time at which it was captured. The media elements contained in the synchronisation data may be read from the first copy of the media file and will always be valid, as the media elements in the media file's file body are written sequentially, so these will not be overwritten even if the file grows.

Once synchronisation data is sent and the second copy of the media file synchronised the version of the current descriptor portion contained in the synchronisation data, is stored as the "last updated" descriptor portion to be used in a subsequent iteration of the synchronisation process.

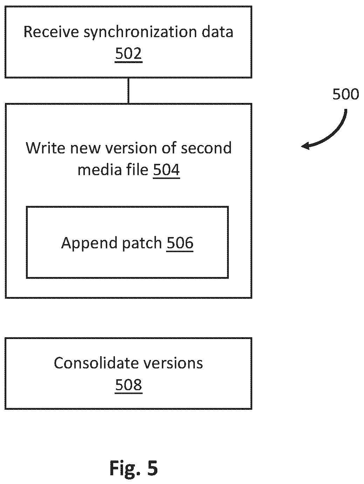

Figure 5 is a flow chart that illustrates the write process 500 performed by the second computing device 120 to synchronise the second copy of the media file using the received synchronisation data. The process 500 is a file versioning process. Properties of a versioning process can be useful during download of the file by another device. In particular the versioning process allows a valid version of the file to be separated from a version of the file currently being written to avoid the download process getting into a race condition between the writing of the growing file on the storage device 120 and the synchronising of the downloaded file at the media consumer 140. This process will be described below.

The synchronisation process at the second device (storage system 120) begins at 502 by receiving synchronisation data to enable updating of the second copy of the media file. Next the the second copy of the media file at the second computing device is updated by writing a new version of the second media file 504. This involves updating data relating to least one of, the file header; descriptor portion in a new version of the second copy of the media file. In a one form step 504 creates at 506 a new version of the new version of the second copy of the media file by appending a patch to a current version of the second copy of the media, said patch containing said updated data and updated media elements.

The second computing device (storage system 120) may prevent reading of the patch of the new version of the second copy of the media file until the writing of the updated data is complete. This means that a client computing device creating a synchronised copy of the second media file will always only read the current version of the second copy of the second media file during synchronisation, so that the client computing device always see a valid file.

After upload of second copy of the media file is complete and the synchronisation concluded (i.e. both the first copy of the media file, and second copy of the media file are finalised.) it may be desirable to re-write the second media file into a complete file without versioning 508. In this way the second copy of the media file at the storage system 120 should be substantially identical to the first copy of the media file at media source 110.

### Synchronised "download" process

At any time after the second media file has begun being stored on the storage system 120 it can be synchronised to a client device 140, called herein synchronised download. Synchronised download can be performed as the copy of the media file is growing through a synchronised upload process between the media source 110 and the storage medium 120.

The Synchronised "download" process from the storage system 120 to the client device 140, is similar to the synchronised upload process, except that the storage system 120 takes the role of the first computing device, on which the first copy of the media file is created and stored, and the client device 140 takes the role of the second computing device on which the second copy of the media file is created and stored. Additionally the synchronised download process is initiated and controlled by a computing process running on the client device 140.

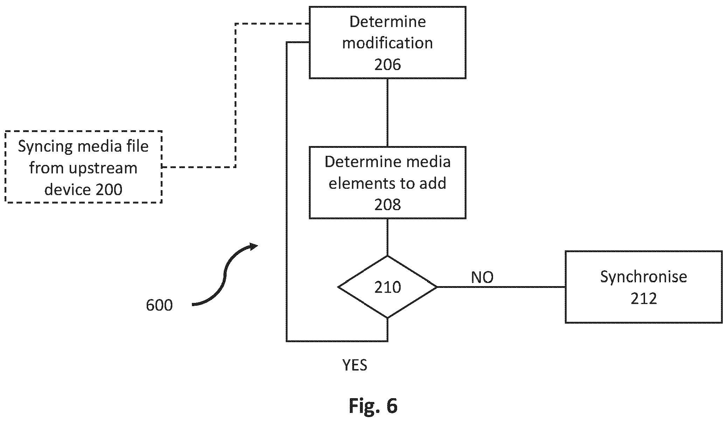

Figure 6 illustrates a method of synchronising a media file between two computing devices being the storage system 120 and the client device 140 while the file is being written to the storage system 120. In this example an upstream synchronisation process 200 (illustrated in dotted lines) as described above running on the first computing device (storage system 120) controls the creation and growth of the media file on the data storage medium 130 of the first computing device (storage system 120). As new media elements become available the process of growing the file 200 will continue.

To synchronise a copy of the media file on the client device 140 a separate synchronisation process, the "synchronised download process" is initiated by the client device 140. After storing an initial copy of the media file on the client device, the method 600 of synchronising the media file continues to keep it synchronised with the first copy of the media file stored on the storage system 120 as follows. The method 600 begins by, determining (206) whether there has been a modification to a descriptor portion of the first copy of the media file. This may be performed by the synchronisation process of the second computing device (client device 140) receiving a notification of a modification from the process or application causing the growing of the media file on the first computing device (storage system 120). Alternatively the synchronisation process may poll the storage system to detect a modification to the media file, or by parsing or inspecting the media file. For example the synchronisation process 200 may read the first copy of the media file to determine if there has been a change in either the location or content of one of the components of the media file. The location of the media file's descriptor portion may be determined (e.g. from its file header), or the content of descriptor portion of the media file on the first computing device (i.e. the first copy of the media file) may be checked for changes, such as by comparing the current descriptor portion the media file against the current downloaded copy of the descriptor portion of the of the media file. This stored copy of the descriptor portion of the media file is the version of the descriptor portion resulted from the last (ie. most recent prior) synchronisation process, called herein for convenience the "last updated descriptor portion". As noted above, the first media file may be saved with versions, so determining a change in the first copy of the media file may involve checking if the file's version number has changed.

Next the method 600 continues at 208 by determining media elements that have been added to the first copy of the media file since the last update, and thus need to be received by the second computing device (client device 140) for addition to its second copy of the media file to synchronise the copies of the media file with each other. Step 208 can be performed by the client device 140 by comparing the last-updated version descriptor portion of the media file, contained in its current copy of the media file, with the current descriptor portion of the media file at the first computing device (storage system 140). This comparison identifies the location of the media elements in the file body of the first copy of the media file that have been written to the file body since the last synchronisation was performed.

One difficulty in a method of the present embodiment is avoiding a situation where the growing process continues to update the media file and overwrites the descriptor portion of the first copy of the media file before synchronisation is competed. The presence of such a condition is checked at 210 before synchronisation occurs. At step 210, if the synchronisation process 200 determines that there have been no further modifications to the descriptor portion of the first copy of the media file (during the performance of step 208), synchronisation can continue at step 212 by sending synchronisation data to the second computing device to enable updating of the second copy of the media file. This is can be achieved by comparing the current location of the descriptor portion of the media file and its location at the time of performing step 206 or by checking the version number of the first copy of the media file. As noted above the first computing device (storage system 120) may prevent the second computing device (client device 140) from reading the patch of a newer (and partly written) version of the second copy of the media file until it is complete. This means that a client computing device creating a synchronised copy of the second media file will always only read the most recent valid current version of the second copy of the media file during synchronisation.

In the event in step 210 that there have been further modifications to the media file's descriptor portion while performing steps 206/208 the process 200 returns to step (a) without synchronising.

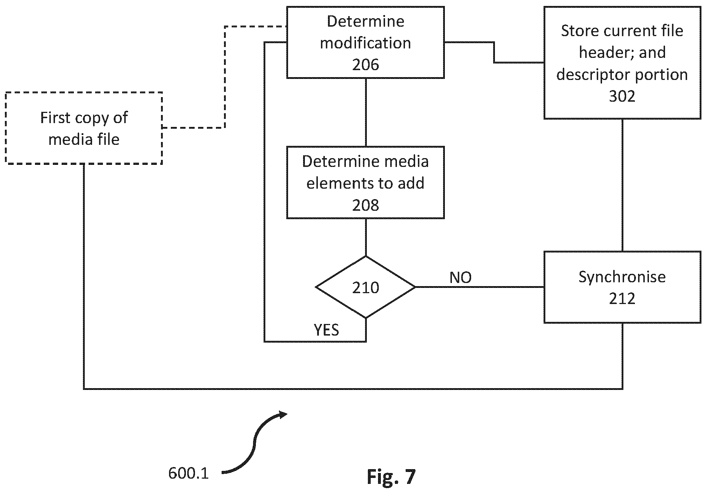

Figure 7 illustrates a further development of the method of figure 6 and common steps have common reference numerals and will not be re-described. To further assist ensuring that the synchronised, second copy of the media file stored at the second computing device 120 (the storage device) is always a valid file and the method 600.1. the determination step 206 may include a substep 302 of storing the current file header and descriptor portion once a change has been determined to have occurred (and synchronisation is necessary). These stored data are parsed during step 206 and may be stored locally at the second computing device (stored in data storage or working memory) to be used in steps 208 to determine the specific media elements that need to be synchronised, in 210, and optionally in the creation of the synchronisation data as describe below.

Turning firstly to step 210. In a one embodiment the step 210 of checking that there have been no further modifications to the descriptor portion of the first copy of the media file, is performed by comparing the stored version of the descriptor portion and/or file header to the corresponding portions of the media file that are extant at the time of comparison. This may simply involve comparing the version number of the current file header/descriptor portion with the current version number at the first computing device (storage system 130), but in some embodiments it may be advantageous to check the file header to determine if the location of the descriptor has changed (indicating file growing) or only checking the content of the descriptor portion to determine if there are more media elements to synchronise.

In order to synchronise the second copy of the media file so that it matches the first copy of the media file, as it existed at the instant the synchronisation process 600/600.1 was begun it is necessary to update the file header, descriptor portion and add the missing media elements to the second copy. In some embodiments, in order to avoid a temporary situation in which the second copy of the media file contains a mismatch between its descriptor portion and content elements (and this is temporarily unable to be read validly), it can be advantageous to monitor file growing. This is particularly the case in which a synchronisation event 212 will cause the last updated descriptor portion of the second copy of the media file to be overwritten by media elements during the file growing.

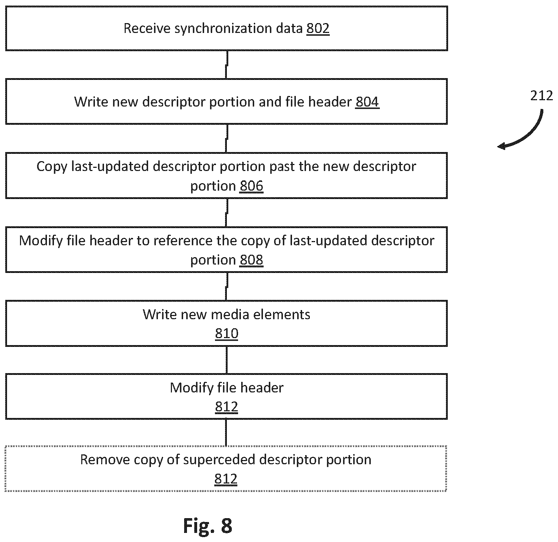

In this case synchronisation of the second copy of the media file 212 may proceed as set out in figure 8. Synchronisation 212 proceeds as follows:
The current version of the descriptor portion and file header of the first copy of the media file **(**received from the first computing device (storage system 120) are written to the second copy of the media file (804).
Prior to any action overwriting the last updated descriptor portion in the second copy of the media file, writing a copy of the last updated version of the descriptor portion at a location in the second copy of the media file that is past the current version of the descriptor portion (806).
The file header of the second copy of the media file can be modified to indicate the location of the copy of the at last updated descriptor portion within the second copy of the media file. This enables temporary reading of media elements referenced by the copy of the at last updated descriptor portion
(808) while new media elements are written.
All media elements contained in the synchronisation data can then be written (810) to the second copy of the media file, regardless of whether they would overwrite the original location of the last updated descriptor portion of the second copy of the media file.
The file header can then be modified (812) to indicate the location of the at current descriptor portion within the file to enable full reading of the second copy of media file including the newly added media elements.
Finally it is possible (but optional) to truncate the second copy of the media file to delete the copy of the (now superceded) last-updated descriptor portion from the second copy of the media file.

Figure 9 provides a block diagram that illustrates one example of a system 1000 upon which embodiments of the disclosure may be implemented. Computer system 1000 includes a bus 1002 or other communication mechanism for communicating information, and a hardware processor 1004 coupled with bus 1002 for processing information. Hardware processor 1004 may be, for example, a general-purpose microprocessor, a graphics processing unit, FPGA, ASIC or other type of processing unit, or combinations thereof.

Computer system 1000 also includes a main memory 1006, such as a random-access memory (RAM) or other dynamic storage device, coupled to bus 1002 for storing information and instructions to be executed by processor 1004. Main memory 1006 also may be used for storing temporary variables or other intermediate information during execution of instructions to be executed by processor 1004. Such instructions, when stored in non-transitory storage media accessible to processor 1004, render computer system 1000 into a special-purpose machine that is customised and configured to perform the operations specified in the instructions.

Computer system 1000 may further include a read-only memory (ROM) 1008 or other static storage device coupled to bus 1002 for storing static information and instructions for processor 1004. A storage device 1010, such as an SSD, magnetic disk, optical disk or other storage medium, or array of such media, may be provided and coupled to bus 1002 for storing information and instructions including the media files, descriptor files, and applications as described above. The storage device 1010 may include, or be augmented, with an external disk, or array of storage media, network attached storage, SAN or other large scale data storage.

The computer system 1000 may be coupled via bus 1002 to a display 1012 (such as an LCD, LED, touch screen display, or other display) for displaying information to a computer user, such as the client device described and illustrated above. An input device 1014, including alphanumeric and other keys, may be coupled to the bus 1002 for communicating information and command selections to processor 1004. Another type of user input device is cursor control 1016, such as a mouse, a trackball, or cursor direction keys for communicating direction information and command selections to processor 1004 and for controlling cursor movement on display 1012.

According to at least one embodiment, the techniques herein are performed by computer system 1000 in response to processor 1004 executing one or more sequences of one or more instructions contained in main memory 1006. Such instructions may be read into main memory 1006 from another storage medium, such as storage device 1010, 1060 or other system such as a remote database. Execution of the sequences of instructions contained in main memory 1006 causes processor 1004 to perform the process steps described herein. In alternative embodiments, hard-wired circuitry may be used in place of or in combination with software instructions.

Computer system 1000 may also include a communication interface 1018 coupled to bus 1002. Communication interface 1018 provides a two-way data communication coupling to a network link 1020 that is connected to communication network 1050. For example, communication interface 1018 may be an integrated services digital network (ISDN) card, cable modem, satellite modem, etc. As another example, communication interface 1018 may be a local area network (LAN) card to provide a data communication connection to a compatible LAN. Wireless links may also be implemented. In any such implementation, communication interface 1018 sends and receives electrical, electromagnetic, or optical signals that carry digital data streams representing various types of information. In embodiments in which the computer system is (or forms part of) a media processing appliance the communications interface 1018 and consequently network link 1018 may be adapted to operate according to a network protocol specialised for media transmission such as HDMI, SDI or other SMPTE standard.

The computer system 1000 may additionally include (or be connected to) a video card or other media capture and/or playback interface 1022. This media capture and/or playback interface 1022 could include one or more of the Blackmagic Desktop Video products such as a Blackmagic Decklink Card, UltraStudio or the like. It may be integrated into the computer 1000 (e.g., as a video card may be) or standalone hardware unit(s).

The computer system 1000 may additionally be connected to an external storage system 1060, e.g., via the network link 1020 (and optionally network 1050). The external storage system may be an external disk, or array of storage media, network attached storage, SAN or other large scale data storage which may be accessed via a network or communications connection.

The terms "storage media" or "storage medium" as used herein refers to any non-transitory media that stores data and/or instructions that cause a machine to operate in a specific fashion. Such storage media may comprise non-volatile media and/or volatile media. Non-volatile media includes, for example, optical or magnetic disks, such as storage device 1010, and storage devices forming parts of external storage system 1060. Volatile media includes dynamic memory, such as main memory 1006. Common forms of storage media include, for example, a floppy disk, a flexible disk, hard disk, solid state drive, magnetic tape, or any other magnetic data storage medium, flash memory, a CD-ROM, any other optical data storage medium, any physical medium with patterns of holes, a RAM, a PROM, and EPROM, a FLASH-EPROM, NVRAM, any other memory chip or cartridge.

Any definitions expressly provided herein for terms contained in the appended claims shall govern the meaning of those terms as used in the claims. No limitation, element, property, feature, advantage, or attribute that is not expressly recited in a claim should limit the scope of the claim in any way.

As used herein the terms "include" and "comprise" (and variations of those terms, such as "including", "includes", "comprising", "comprises", "comprised" and the like) are intended to be inclusive and are not intended to exclude further features, components, integers, or steps.

For aspects of the disclosure that have been described using flowcharts, a given flowchart step could potentially be performed in various ways and by various devices, systems, or system modules. A given flowchart step could be divided into multiple steps and/or multiple flowchart steps could be combined into a single step unless the contrary is specifically noted as essential. Furthermore, the order of the steps can be changed without departing from the scope of the present disclosure, unless the contrary is specifically noted as essential.

It will be understood that the present invention has been described above purely by way of example, and modifications of detail can be made within the scope of the invention.

Reference numerals appearing in the claims are by way of illustration only and shall have no limiting effect on the scope of the claims.

Various aspects and embodiments of the present invention are defined in the following clauses:
Clause 1. A method of synchronising a media file between two computing devices; said media file including:
   a file header;
   at least one descriptor portion enabling reading of media elements in the body portion; wherein the file header includes an indication of a location of the at least one descriptor portion within the file; and
   at least one file body in which media elements are stored;
   said synchronising of the media file occurring between a first copy of the media file stored at a first computing device, and a second copy of the media file stored on a second computing device, wherein
   synchronisation of the second copy of the media file with the first copy of the media file commences before finalisation of the first copy of the media file and continues at least while one or more media elements are being written to a file body of the first copy of the media file at the first computing device;
   wherein said method comprises:
      (a) determining a modification to a descriptor portion of the first copy of the media file;
      (b) determining media elements to send to the second computing device for addition to the second copy of the media file;
      (c) in the event that there have been no further modifications to the descriptor portion of the first copy of the media file, sending synchronisation data to the second computing device to enable updating of the second copy of the media file.
Clause 2. The method of clause 1 which includes storing a last-updated version of the descriptor portion of the first copy of the media file to enable step (a).
Clause 3. The method of any one of the preceding clauses wherein step (a) comprises any one or more of:
   receiving a notification of a modification from another process or application;
   polling the first cop of the media file to detect a detect a modification thereto;
   determining a change in either or both of, a location or content of the descriptor portion of the first copy of the media file.
Clause 4. The method of clause 2 wherein in the event that there have been further modifications to the media file's descriptor portion in the first copy of the media file while performing (b) returning to step (a).
Clause 5. The method of any one of the preceding clauses wherein step (b) comprises:
   comparing the last-updated version of the descriptor portion of the first copy of the media file to a current descriptor portion of the first copy of the media file; and determining one or more media elements written to the file body since the storage of the last-updated version of the media file's descriptor portion.
Clause 6. The method of any one of the preceding clauses wherein the synchronisation data comprises:
   a current file header;
   a current descriptor portion of the first copy of the media file; and
   those media elements written to the file body of the first version of the media file, between the storage of the last-updated version of the media file's descriptor portion and the time at which (a) was performed.
Clause 7. The method of clause 6 wherein step (a) includes:
   storing a separate copy of the current version of the descriptor portion and file header of the first copy of the media file;
   wherein in step (c) the synchronisation data is derived from:
      said separate copy of the current version of the descriptor portion and file header of the first copy of the media file; and
      media elements written to the file body of the first version of the media file, since the storage of the last-updated version of the descriptor portion of the first copy of the media file and the time at which said separate copies of the current version of the descriptor portion and file header of the first copy of the media file were made.
Clause 8. The method of clause 7 which upon synchronisation of the second copy of the file the method comprises:
   updating the last-updated version of the descriptor portion of the first copy of the media file using the current version of the descriptor portion used in the last synchronisation event and returning to step (a) to enable a subsequent synchronisation.
Clause 9. The method of any one of the preceding clauses which is performed by a synchronisation process or application that is separate to a process or application causing the first copy of the media file to be written at the first computing device.
Clause 10. The method of clause 9 wherein the process or application causing the first copy of the media file to be written at the first computing device indicates to the synchronisation process the finalisation of writing the first copy of the media file.
Clause 11. A method of synchronising a media file between two computing devices; said media file said media file including:
   a file header;
   a descriptor portion enabling reading of media elements in the body portion; wherein the file header includes an indication of a location of the descriptor portion within the file; and
   a file body in which media elements are stored;
   said synchronising of the media file occurring between a first copy of the media file stored at a first computing device, and a second copy of the media file stored on a second computing device, wherein synchronisation of the second copy of the media file with the first copy of the media file commences before finalisation of the first copy of the media file and continues at least while one or more media elements are being written to the file body of the first copy of the media file at the first computing device;
   wherein said method comprises, at the second computing device:
      receiving synchronisation data to enable updating of the second copy of the media file;
      updating the second copy of the media file at the second computing device by writing updated data relating to least one of, the file header; descriptor portion or file body of the second copy of the media file.
Clause 12. The method of clause 11 which comprises creating a new version of the second copy of the media file.
Clause 13. The method of either of clauses 11 or 12 wherein creating a new version of the second copy of the media file comprises appending a patch to current version of the second copy of the media, said patch containing said updated data.
Clause 14. The method of any one of clauses 11 to 13 which includes preventing reading of said patch of the new version of the second copy of the media file until the writing of the updated data is complete, such that a client computing device can only read the current version of the second copy of the second media file during synchronisation.
Clause 15. The method of any one of clauses 11 to 14 which further includes, at the second computing device, updating the second copy of the media file by:
   writing the current version of the descriptor portion and file header of the first copy of the media file to the second copy of the media file;
   writing the media elements contained in the synchronisation data to the to the second copy of the media file.
Clause 16. The method of clause 15 which wherein in the event that writing the media elements contained in the synchronisation data to the to the second copy of the media file would overwrite the copy of the last updated descriptor portion in the second copy of the media file; the method further includes:
   prior to overwriting the last updated descriptor portion of the second copy of the media file with new media elements, writing a copy of the last-updated version of the descriptor portion at a location past the current version of the descriptor portion; and
   modifying the file header to indicate the location of the at last updated descriptor portion within the second copy of the media file to enable temporary reading of the second copy of the media file during synchronisation; and
   once all media elements contained in the synchronisation data are written to the second copy of the media file, modifying the file header to indicate the location of the at current descriptor portion within the file to enable full reading of the second copy of media file.
Clause 17. The method of clause 16 which includes:
   truncating the second copy of the media file to delete the last updated descriptor portion from the second copy of the media file, after synchronisation.
Clause 18. A method of synchronising a media file between two computing devices, comprising a first computing device and a second computing device that are in data communication with each other via a communications network;
   performing a method of any one of clauses 1 to 10 at the first computing device; and
   performing a method of any one of clauses 11 to 14 at the second computing device.

## Claims

1. A method of synchronising a media file between two computing devices; said media file including:
a file header;
at least one descriptor portion enabling reading of media elements in the body portion;
wherein the file header includes an indication of a location of the at least one descriptor portion within the file; and
at least one file body in which media elements are stored;
said synchronising of the media file occurring between a first copy of the media file stored at a first computing device, and a second copy of the media file stored on a second computing device, wherein synchronisation of the second copy of the media file with the first copy of the media file commences before finalisation of the first copy of the media file and continues at least while one or more media elements are being written to a file body of the first copy of the media file at the first computing device;
wherein said method comprises:
(a) determining a modification to a descriptor portion of the first copy of the media file;
(b) determining media elements to send to the second computing device for addition to the second copy of the media file;
(c) in the event that there have been no further modifications to the descriptor portion of the first copy of the media file, sending synchronisation data to the second computing device to enable updating of the second copy of the media file.

2. The method of claim 1 which includes storing a last-updated version of the descriptor portion of the first copy of the media file to enable step (a).

3. The method of any one of the preceding claims wherein step (a) comprises any one or more of:
receiving a notification of a modification from another process or application;
polling the first cop of the media file to detect a detect a modification thereto;
determining a change in either or both of, a location or content of the descriptor portion of the first copy of the media file.

4. The method as claimed in claim 2 wherein in the event that there have been further modifications to the media file's descriptor portion in the first copy of the media file while performing (b) returning to step (a).

5. The method as claimed in any one of the preceding claims wherein step (b) comprises:
comparing the last-updated version of the descriptor portion of the first copy of the media file to a current descriptor portion of the first copy of the media file; and determining one or more media elements written to the file body since the storage of the last-updated version of the media file's descriptor portion.

6. The method as claimed in any one of the preceding claims wherein the synchronisation data comprises:
a current file header;
a current descriptor portion of the first copy of the media file; and
those media elements written to the file body of the first version of the media file, between the storage of the last-updated version of the media file's descriptor portion and the time at which (a) was performed.

7. The method as claimed in claim 6 wherein step (a) includes:
storing a separate copy of the current version of the descriptor portion and file header of the first copy of the media file;
wherein in step (c) the synchronisation data is derived from:
said separate copy of the current version of the descriptor portion and file header of the first copy of the media file; and
media elements written to the file body of the first version of the media file, since the storage of the last-updated version of the descriptor portion of the first copy of the media file and the time at which said separate copies of the current version of the descriptor portion and file header of the first copy of the media file were made.

8. The method of claim 7 which upon synchronisation of the second copy of the file the method comprises:
updating the last-updated version of the descriptor portion of the first copy of the media file using the current version of the descriptor portion used in the last synchronisation event and returning to step (a) to enable a subsequent synchronisation.

9. The method as claimed in any one of the preceding claims which is performed by a synchronisation process or application that is separate to a process or application causing the first copy of the media file to be written at the first computing device.

10. The method as claimed in claim 9 wherein the process or application causing the first copy of the media file to be written at the first computing device indicates to the synchronisation process the finalisation of writing the first copy of the media file.

11. A method of synchronising a media file between two computing devices; said media file said media file including:
file header;
a descriptor portion enabling reading of media elements in the body portion; wherein the file header includes an indication of a location of the descriptor portion within the file; and
a file body in which media elements are stored;
said synchronising of the media file occurring between a first copy of the media file stored at a first computing device, and a second copy of the media file stored on a second computing device, wherein synchronisation of the second copy of the media file with the first copy of the media file commences before finalisation of the first copy of the media file and continues at least while one or more media elements are being written to the file body of the first copy of the media file at the first computing device;
wherein said method comprises, at the second computing device:
receiving synchronisation data to enable updating of the second copy of the media file;
updating the second copy of the media file at the second computing device by writing updated data relating to least one of, the file header; descriptor portion or file body of the second copy of the media file.

12. The method of claim 11 which comprises creating a new version of the second copy of the media file.

13. The method of either of claims 11 or 12 wherein creating a new version of the second copy of the media file comprises appending a patch to current version of the second copy of the media, said patch containing said updated data.

14. The method of any one of claims 11 to 13 which includes preventing reading of said patch of the new version of the second copy of the media file until the writing of the updated data is complete, such that a client computing device can only read the current version of the second copy of the second media file during synchronisation.

15. The method of any one of claims 11 to 14 which further includes, at the second computing device, updating the second copy of the media file by:
writing the current version of the descriptor portion and file header of the first copy of the media file to the second copy of the media file;
writing the media elements contained in the synchronisation data to the to the second copy of the media file.

16. The method of claim 15 which wherein in the event that writing the media elements contained in the synchronisation data to the to the second copy of the media file would overwrite the copy of the last updated descriptor portion in the second copy of the media file; the method further includes:
prior to overwriting the last updated descriptor portion of the second copy of the media file with new media elements, writing a copy of the last-updated version of the descriptor portion at a location past the current version of the descriptor portion; and
modifying the file header to indicate the location of the at last updated descriptor portion within the second copy of the media file to enable temporary reading of the second copy of the media file during synchronisation; and
once all media elements contained in the synchronisation data are written to the second copy of the media file, modifying the file header to indicate the location of the at current descriptor portion within the file to enable full reading of the second copy of media file.

17. A method of synchronising a media file between two computing devices, comprising a first computing device and a second computing device that are in data communication with each other via a communications network;
performing a method of any one of claims 1 to 10 at the first computing device;
performing a method of any one of claims 11 to 14 at the second computing device.
